(19) Europäisches Patentamt
European Patent Office
Office européen des brevets

(11) **EP 2 379 437 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(21) Anmeldenummer: **10700428.5**

(22) Anmeldetag: **18.01.2010**

(51) Int Cl.:
**B66B 15/04** *(2006.01)*

(86) Internationale Anmeldenummer:
**PCT/EP2010/050544**

(87) Internationale Veröffentlichungsnummer:
**WO 2010/084104 (29.07.2010 Gazette 2010/30)**

(54) **TREIBSCHEIBE ZU AUFZUGANLAGE**

LIFT FACILITY WITH DRIVE DISC

INSTALLATION D'ASCENSEUR DOTÉE D'UN DISQUE D'ENTRAÎNEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.01.2009 EP 09151077**

(43) Veröffentlichungstag der Anmeldung:
**26.10.2011 Patentblatt 2011/43**

(73) Patentinhaber: **Inventio AG**
**6052 Hergiswil (CH)**

(72) Erfinder: **ZAPF, Volker**
**CH-6012 Obernau (CH)**

(74) Vertreter: **Hirschberger, Petra**
**Inventio AG**
**Seestrasse 55**
**6052 Hergiswil (CH)**

(56) Entgegenhaltungen:
**GB-A- 1 121 220        JP-A- 54 081 569**
**US-A- 4 013 142        US-A1- 2004 211 497**
**US-A1- 2007 034 454    US-A1- 2007 062 762**
**US-B1- 6 371 448**

**Beschreibung**

Die Erfindung betrifft eine Treibscheibe zum Antreiben eines Zugmittels einer Aufzuganlage sowie eine Aufzuganlage mit solch einer Treibscheibe. Speziell betrifft die Erfindung eine Aufzuganlage, bei der eine solche Treibscheibe ein Zugmittel antreibt, das als Riemen mit elastomerer Ummantelung, insbesondere als Keilrippenriemen, ausgebildet ist.

Aus der GB 1 121 220 ist eine Traktionsseilscheibe, die zum Zusammenwirken mit Aufzugseilen dient, bekannt. Bei dieser Traktionsseilscheibe sind an deren Peripherie Einsätze aus Kunststoff fixiert, die Traktionsflächen zum Zusammenwirken mit den Aufzugseilen bzw. zum Antreiben desselben umfassen. Diese Traktionsflächen bilden halbrunde Seilrillen zum Aufnehmen von runden Aufzugseilen, wobei die Seilrillen mit quer zu deren Längsachse ausgerichteten Querrillen versehen sind. Der Zweck dieser Querrillen besteht darin, die Traktionsfähigkeit zwischen Treibscheibe und Aufzugseil auch zu gewährleisten, wenn Schmieröl aus dem Aufzugseil austritt.

Aus der US2007/062762 A1 ist eine einstückige Traktionsseilscheibe, die zum Zusammenwirken mit riemenartigen Zugmitteln dient, bekannt.

Solche Treibscheiben mit Kunststoffeinsätzen sind einerseits aufwändig und teuer. Das Hauptproblem besteht jedoch darin, dass solche Treibscheiben mit Durchmessern von weniger als 100mm praktisch nicht mehr realisierbar sind, da die Fixierung der Einsätze bei so geringen Gesamtabmessungen nicht mehr ausreichend stabil ausführbar ist. Solche Treibscheibendurchmesser sind aber bei modernen Aufzugantrieben heute üblich.

Aufgabe der Erfindung ist es, eine Aufzugsanlage mit einer Treibscheibe zu schaffen, die eine verbesserte Traktion ermöglicht, mit geringem Durchmesser ausführbar und kostengünstig ist. Speziell ist es eine Aufgabe der Erfindung, eine Aufzuganlage mit einer Treibscheibe zu schaffen, bei denen im Stillstand ein Kriechen des Zugmittels infolge eines relativ ausgeprägten Unterschieds zwischen den wirkenden Zugkräften in den beiden zur Treibscheibe führenden Trumen des Zugmittels verhindert oder zumindest verringert ist. Insbesondere soll ein Kriechen beim Zusammenwirken der erfindungsgemässen Treibscheibe mit einem Zugmittel reduziert bzw. verhindert werden, dessen Traktionsfläche aus einem Elastomer besteht.

Die Aufgabe wird durch eine erfindungsgemässe Aufzuganlage mit den Merkmalen des Anspruchs 1 gelöst.

Durch die in den Unteransprüchen aufgeführten Massnahmen sind vorteilhafte Weiterbildungen der im Anspruch 1 angegebenen Aufzuganlage möglich.

Es ist anzumerken, dass ein Zugmittel neben der Funktion des Tragens der Aufzugkabine auch die Funktion haben kann, die Kraft oder das Moment der Antriebsmaschine zu der Aufzugkabine zu übertragen, um die Aufzugkabine zu heben oder zu senken. Dabei kann die Aufzugkabine durch eine oder mehrere Führungsschienen geführt sein. Entsprechendes gilt für ein gegebenenfalls vorhandenes Gegengewicht.

Unter dem Begriff "Traktionsfläche einer Treibscheibe" ist eine Umfangsfläche einer Treibscheibe zu verstehen, die mit einem Zugmittel der Aufzuganlage in Kontakt steht und mit diesem zum Tragen und Antreiben des Zugmittels und einer Aufzugkabine zusammenwirkt. Je nach Ausführungsart der Zugmittel kann einem einzelnen Zugmittel eine einzige Traktionsfläche zugeordnet sein, oder einem einzelnen Zugmittel können mehrere Traktionsflächen der Treibscheibe zugeordnet sein. Eine Treibscheibe kann mit einem einzigen Zugmittel oder mit mehreren Zugmitteln zusammenwirken. Als Zugmittel kommen insbesondere Rundseile oder Flachriemen in Frage.

Nach einer der Ausführungsformen der Erfindung ist die Rillenbreite der Rillen kleiner als 3 mm. Mit dieser Limitierung der Rillenbreite wird gewährleistet, dass das Zugmittel, insbesondere ein elastomerer Mantel des Zugmittels, zu stark in die Rillen eindringt. Damit wird einerseits eine Zerstörung der Zugmitteloberfläche verhindert, und andererseits wird damit verhindert, dass beim Zusammenwirken von Zugmittel und Treibscheibe übermässig starke Geräusche entstehen.

Nach einer der Ausführungsformen der Erfindung weist die Treibscheibe mehrere nebeneinander angeordnete Traktionsflächen für mehrere parallel angeordnete Zugmittel auf, wobei die Rillen sich unterbrechungsfrei quer zur Umfangsrichtung der Treibscheibe über alle Traktionsflächen erstrecken.

Damit wird erreicht, dass die Traktionsverbesserung über die gesamte Rillenbreite der zwischen Zugmittel und Treibscheibe vorhandenen Berührungsflächen stattfindet, und dass Schmiermittel und Schmutz durch die Rillen seitwärts abgeleitet werden können.

Nach einer der Ausführungsformen der Erfindung ist eine Vielzahl von Rillen gleichmässig über den Umfang der Treibscheibe verteilt angeordnet. Durch die in grosser Zahl vorhandenen Rillen können Schmutz, überschüssiges Schmiermittel oder dergleichen abgeleitet werden, und eine zuverlässige Traktionswirkung in ausreichender Grösse ist über die gesamte Betriebsdauer gewährleistet.

Nach einer der Ausführungsformen der Erfindung ist das Material der Treibscheibe härtbarer Stahl, wobei mindestens eine Traktionsfläche gehärtet ist. Als Material für die Herstellung einer erfindungsgemässen Treibscheibe kann auch ein Chromstahl oder ein Chrom-Nickel-Stahl zum Einsatz kommen. Die Treibscheibe kann jedoch auch aus anderen Metallen oder aus einem Kunststoff, beispielsweise aus Polyamid (PA) oder Polyetheretherketon (PEEK), hergestellt sein.

Nach einer der Ausführungsformen der Erfindung weist mindestens eine Traktionsfläche zumindest teilweise eine erhöhte Oberflächenrauheit auf, wobei die Traktionsfläche zum Erhöhen der Oberflächenrauheit Riefen aufweist, die in einer Richtung verlaufen, die von der Umfangsrichtung abweicht. Solche Traktionsflächen erhöhen zusätzlich die Traktionsfähigkeit zwischen Treibscheibe und Zugmittel, d. h. sie reduzieren zusätzlich den zwischen Treibscheibe und Zugmittel auftretenden Schlupf. Oberflächenrauheiten, insbesondere Riefen, können beispielsweise mittels Sandstrahlen oder mit Hilfe von rotierenden Stahldrahtbürsten in die Traktionsflächen eingebracht werden.

Nach einer der Ausführungsformen der Erfindung ist mindestens eine Traktionsfläche der Treibscheibe mit einer haftverstärkenden Beschichtung versehen. Solche Beschichtungen können beispielsweise in Form von Hartchrombeschichtungen oder in Form von dünnen Hartstoffschichten mit Nanopartikeln aufgebracht werden. Speziell kann eine so genannte Topochrom-Beschichtung vorgesehen sein. Dabei wird galvanisch eine Chromschicht aufgebracht, bei der aus einer Grundchromschicht herausgewachsene kalottenförmige Mikrostrukturen eine Strukturschicht bilden, die von einer dünnen Endschicht aus Chrom bedeckt ist. Die Ausbildung von kalottenförmigen Mikrostrukturen kann durch Prozessparameter, wie Stromstärke, Temperatur und Strömungsgeschwindigkeit des Elektrolyts, während des galvanischen Beschichtungsprozesses gesteuert werden. Dadurch können kalottenförmige Mikrostrukturen mit Durchmessern von beispielsweise weniger als 0,1 mm ausgestaltet werden.

Als Beispiel für Hartstoffschichten mit Nanopartikeln ist hier die Einbettung von Nanokristalle aus AlTiN oder AlCrN in eine Matrix aus amorphem Siliziumnitrid ($Si_3N_4$) eingebettet sein können. Es existiert jedoch eine Vielzahl von Möglichkeiten zur Erzeugung von Hartstoffschichten auf der Basis von Nanopartikeln.

Eine bevorzugte Ausführungsform der Erfindung besteht darin, dass eine Aufzuganlage als Zugmittel zumindest ein riemenartiges Zugmittel mit einem Mantel aus einem Elastomer umfasst, das mit einer Treibscheibe zusammenwirkt, die zumindest eines der der vorstehend beschriebenen Merkmale aufweist. Eine Aufzuganlage mit solch einem Zugmittel hat den Vorteil, dass die günstigen Eigenschaften des Zugmittels und der erfindungsgemässen Treibscheibe kombiniert werden können, um ein Kriechen zwischen der Treibscheibe und dem Zugmittel im Stillstand zu vermeiden. Als Elastomer kann insbesondere ein Polyurethan, ein Ethylen-Propylen-Kautschuk (EPDM) oder ein Naturkautschuk zum Einsatz kommen.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:

Fig. 1 eine schematische Darstellung einer Aufzuganlage entsprechend einem ersten Ausführungsbeispiel der Erfindung;

Fig. 2 einen Schnitt durch die in Fig. 1 gezeigte Aufzuganlage entlang der mit II bezeichneten Schnittlinie entsprechend dem ersten Ausführungsbeispiel der Erfindung und

Fig. 3 den in Fig. 2 mit III bezeichneten Ausschnitt einer Treibscheibe einer Aufzuganlage entsprechend einem zweiten Ausführungsbeispiel der Erfindung.

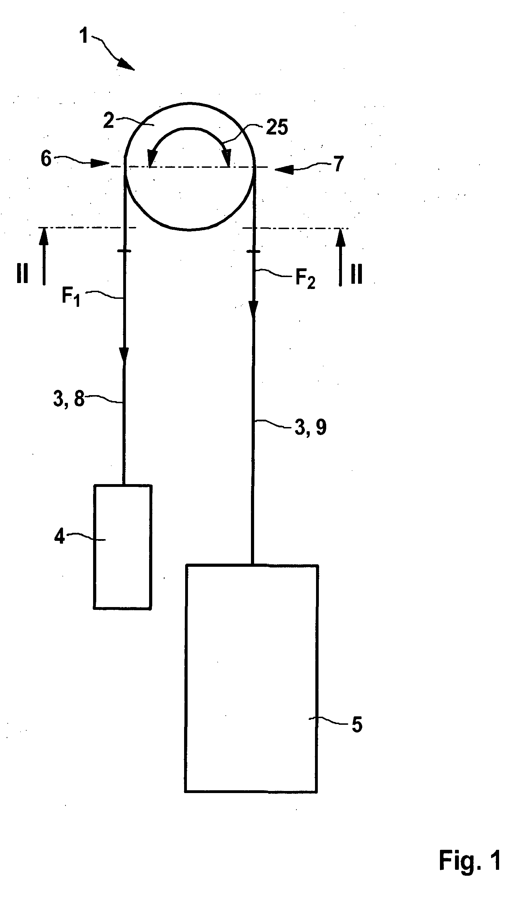

Fig. 1 zeigt eine Aufzuganlage 1 in einer schematischen Darstellung entsprechend einem ersten Ausführungsbeispiel der Erfindung. Die Aufzuganlage 1 weist eine Treibscheibe 2 auf, die zum Antreiben von mehreren Zugmitteln 3-3E dient. Dabei ist in der Fig. 1 ein Fall dargestellt, in dem einerseits ein Gegengewicht 4 und andererseits eine Aufzugkabine 5 mittels der Zugmittels 3-3E an der Treibscheibe 2 aufgehängt sind. Hierbei sind die im Stillstand der Treibscheibe 2 wirkende, durch das Gegengewicht 4 erzeugte Zugkraft F1 und die durch die Aufzugkabine 5 erzeugte Zugkraft F2 dargestellt, die an den Seiten 6 bzw. 7 der Treibscheibe 2 auf den die Treibscheibe 2 umschlingenden Bereich des Zugmittels 3 wirken. Die Treibscheibe 2 ist mit einer Antriebsmaschineneinheit verbunden und beispielsweise im oberen Bereich eines Schachtes der Aufzuganlage 1 positioniert.

In der Fig. 1 ist ein Fall dargestellt, in dem die Kraft F1 des Gegengewichts 4 grösser ist als die Kraft F2 der Aufzugkabine 5. Beispielsweise kann die Aufzugkabine 5 unbeladen sein. Die Kraft des Gegengewichts 4 wirkt in dem Trum (Zugmittelabschnitt) 8 des Zugmittels 3 auf der Seite 6 der Treibscheibe 2. Die Kraft F2 der Aufzugkabine 5 wirkt in dem Trum 9 des Zugmittels 3 auf der Seite 7 der Treibscheibe 2. Ein Verhältnis S der Kräfte F1, F2 in den beiden von der Treibscheibe 2 wegführenden Trumen 8, 9 des Zugmittels 2 ist als Quotient bestimmt mit einem Dividend, der gleich der Kraft F1 des Gegengewichts 4 ist, und einem Divisor, der gleich der Kraft F2 der Aufzugkabine 5 ist:

$$(1) \quad S = F1/F2.$$

Wenn das Verhältnis S ausserhalb eines Bereichs von etwa $1/S_{max}$ bis etwa $S_{max}$ ist, dann besteht das Problem, dass bei stehender Treibscheibe 2 ein Kriechen zwischen der Treibscheibe 2 und dem Zugmittel 3 auftritt. Hierbei ist $S_{max}$ notwendigerweise grösser als 1. Bei einem herkömmlichen Aufzug kann dieser Bereich beispielsweise durch $S_{max} = 1,7$ bestimmt sein. Je grösser der durch $S_{max}$ bestimmte Bereich ist, das heisst je grösser $S_{max}$ ist, desto unterschiedlicher können auch die Kräfte F1, F2 ausgeprägt sein, ohne dass ein Kriechen zwischen der Treibscheibe 2 und dem Tragmittel 3 auftritt.

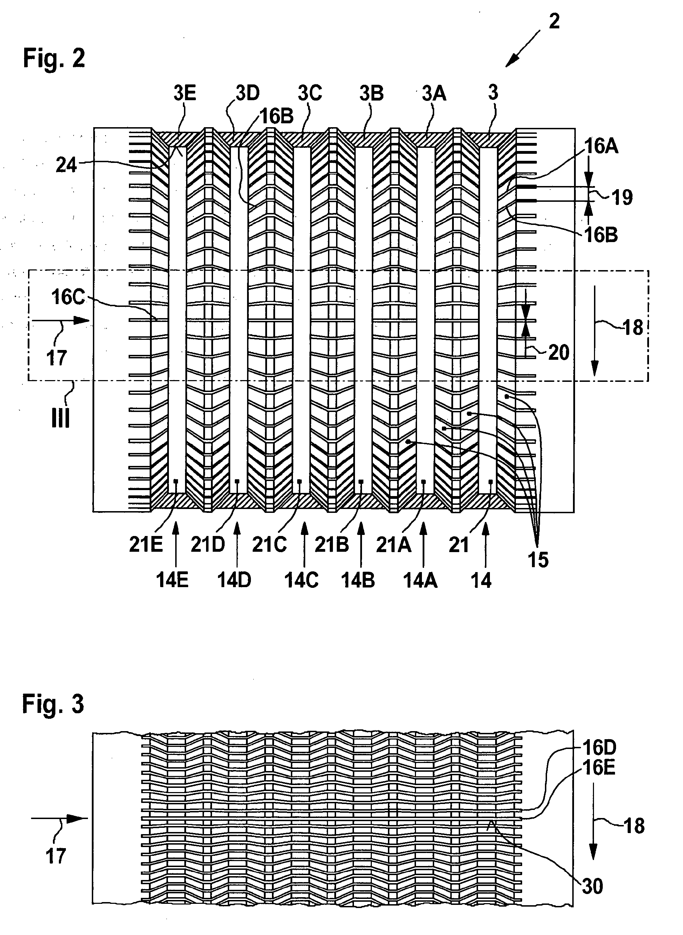

Fig. 2 zeigt einen Schnitt durch die in Fig. 1 ge-

zeige Aufzuganlage 1 entlang der mit II bezeichneten Schnittlinie. Dieser Schnitt umfasst Schnitte durch mehrere Zugmittel 3, 3A-3E sowie eine Sicht auf die Treibscheibe 2 mit mehreren Traktionsflächen 15.

Im dargestellten Ausführungsbeispiel ist die Treibscheibe 2 mit mehreren in Umfangsrichtung der Treibscheibe 2 orientierten Keilrillen 14, 14A-14E versehen, in denen jeweils ein als Keilriemen ausgebildetes Zugmittel 3, 3A-3E geführt ist und die Treibscheibe umschlingt. In einer bevorzugten Ausführungsform können mehrere solcher Zugmittel miteinander zu einem so genannten Keilrippenriemen verbunden sein.

Jede der Keilrillen 14, 14A-14E der Treibscheibe 2 umfasst je zwei Flanken, die jeweils eine Traktionsfläche 15 bilden. Die Grundflächen 21, 21A-21E der Keilrillen 14, 14A-14E gelangen bei dieser Ausführungsform üblicherweise nicht in Kontakt mit den Zugmitteln 3, 3A-3E und bilden daher keine Traktionsflächen.

Die die Traktionsflächen 15 bildenden Flanken der Keilrillen 14, 14A-14E weisen eine Vielzahl von Vertiefungen in Form von Rillen 16A, 16B, 16C auf. Die Rillen 16A, 16B, 16C verlaufen jeweils in einer Richtung 17, die von einer Umfangsrichtung 18 abweicht. Vorzugsweise, jedoch nicht zwingend ist die Richtung 17 als rechtwinklig zu der Umfangsrichtung 18 verlaufende Querrichtung 17 definiert. Die Richtung 17 ist in diesem Fall zumindest näherungsweise rechtwinklig zu der Umfangsrichtung 18. Die Rillen 16A bis 16C sind gleichmässig über die Traktionsflächen 15, das heisst über den gesamten Umfang der Treibscheibe 2 verteilt angeordnet. Hierbei ist vorzugsweise ein gleichmässiger Abstand 19 zwischen den Rillen 16A bis 16C gewählt, wie dies anhand der Rillen 16A, 16B veranschaulicht ist. Zum Erreichen einer konstanten Traktionsfähigkeit und eines minimalen Verschleisses an der Treibscheibe wie auch am Zugmittel, kann es vorteilhaft sein, die Rillen mit ungleichen Abständen zu erzeugen. Ferner weisen die Rillen 16A bis 16C jeweils in etwa die gleiche Rillenbreite 20 auf, wie es anhand der Rille 16C veranschaulicht ist. Die Rillenbreite 20 ist in vorteilhafter Weise kleiner als 3 mm, bevorzugt kleiner als 2 mm und besonders bevorzugt kleiner als 1 mm gewählt. Ferner sind die Rillen 16A bis 16C bevorzugt scharfkantig, insbesondere mit einem Kantenradius von weniger als 0,01 mm ausgestaltet.

Durch das Zusammenwirken der Rillen 16A bis 16C mit dem Zugmittel 3, 3A-3E, insbesondere mit einem elastomeren Mantel des Zugmittels, wird ein zusätzlicher Beitrag zur Traktionswirkung zwischen den Traktionsflächen 15 der Treibscheibe 2 und den Zugmitteln 3, 3A-3E erzielt. Dadurch kann der durch $S_{max}$ definierte Bereich vergrössert werden, in welchem das Verhältnis S der Kräfte F1 und F2 liegen kann, ohne dass ein Kriechen zwischen der Treibscheibe 2 und dem Zugmittel auftritt.

Bei dem in der Fig. 2 dargestellten Ausführungsbeispiel sind die Rillen 16A bis 16C durch in der Richtung 17 verlaufende Ausnehmungen bzw. Vertiefungen gebildet, die in den Bereichen der Grundflächen 21, 21A-21E unterbrochen sind. Somit sind die Rillen 16A, 16B, 16C nur im Bereich der Flanken der Keilrillen 14-14E, d. h. im Bereich der Traktionsflächen 15 vorhanden. Die durch die Flanken gebildeten Traktionsflächen 15 können ganz oder teilweise mit Riefen oder dergleichen versehen sein, um die Oberflächenrauheit dieser Traktionsflächen 15 zu erhöhen.

Bevorzugte Zugmittel sind als ummantelte Stahlseile bzw. als Riemen ausgestaltet, wobei letztere vorzugsweise eine elastomere Ummantelung umfassen, in welche Stahl- oder Kunstfaser-Seilelemente als Zugverstärkung eingebettet sind. Die Ummantelung weist bevorzugt einen trapezförmigen oder einen runden oder einen rechteckigen Querschnitt oder einen Querschnitt mit mehreren V-förmigen oder trapezförmigen Rippen auf. Es können jedoch auch so genannte Keilrippenriemen verwendet werden, die im Wesentlichen einen Verbund aus mehreren Keilriemen bilden.

Selbstverständlich ist die vorliegende Erfindung auch bei Treibscheiben mit flachen oder gewölbten Traktionsflächen anwendbar, die beispielsweise mit einem oder mehreren Flachriemen zusammenwirken. Dabei können sich mehrere über den Umfang der Treibscheibe verteilt angeordnete Rillen jeweils über die gesamte Breite oder nur über einen Teil der Breite der zwischen dem mindestens einen Flachriemen und der Treibscheibe vorhandenen mindestens einen Traktionsfläche erstrecken.

Die Zugmittel 3, 3A bis 3E sind durch die in der Fig. 1 veranschaulichten Kräfte F1, F2 beaufschlagt, so dass die Zugmittel im Bereich 25 (Fig. 1), in dem sie die Treibscheibe 2 umschlingen, etwas in die Vertiefungen bzw. die Rillen 16A bis 16C eingreifen. Dadurch halten sich die Zugmittel 3, 3A bis 3E gewissermassen an den Vertiefungen bzw. den Rillen 16A bis 16C. Hierdurch wird die Traktionswirkung zwischen den Traktionsflächen 15 der Treibscheibe 2 und den Zugmitteln 3, 3A-3E verstärkt.

Die als Rillen 16A, 16B, 16C ausgebildeten Vertiefungen können beispielsweise durch Fräsen mit einem Scheibenfräser, durch Laserbearbeitung, durch Schleifen mit schmalen Schleifscheiben, durch Walzprägen oder auf andere Weise erzeugt werden.

Fig. 3 zeigt den in Fig. 2 mit III bezeichneten Ausschnitt der Treibscheibe 2 einer Aufzuganlage 1, entsprechend einem zweiten Ausführungsbeispiel der Erfindung. In diesem Ausführungsbeispiel sind in den die Traktionsflächen 15 bildenden Flanken der Keilrillen 14-14E der Treibscheibe 2 eine Vielzahl von Vertiefungen in Form von Rillen 16D, 16E ausgebildet, wobei in der Fig. 3 zur Vereinfachung der Darstellung nur die Rillen 16D, 16E gekennzeichnet sind. Dabei sind alle Rillen 16D, 16E so tief ausgeführt, dass sie sich auch durch die Grundflächen 21, 21A-21E (Fig. 2) der Keilrillen 14,14A-14E der Treibscheibe 2 erstrecken. Damit wird erreicht, dass die Rillen über die im Wesentlichen gesamte Breite der Treibscheibe 2 durchgehende Kanäle bilden. Die Ableitung von Schmutz, überschüssigem Schmiermittel oder dergleichen wird dadurch erleichtert. Die Rillen 16D, 16E erstrecken sich in diesem Ausführungsbeispiel unterbrechungsfrei über alle Traktionsflächen 15 in der Querrichtung 17. Auch diese Rillen 16D, 16E können beispielsweise mit den vorstehend genannten Bearbeitungsverfahren erzeugt werden.

Die Traktionsflächen 15 können zwischen den Rillen 16D, 16E mit einer haftverstärkenden Beschichtung 30 versehen sein. Die Beschichtung kann beispielsweise aus Hartchrom mit kalottenförmigen Mikrostrukturen oder aus dünnen Hartstoffschichten mit Nanopartikeln bestehen.

Die Treibscheibe 2 kann als separate Scheibe ausgestaltet sein. Sie kann aber auch einstückig mit einer Welle eines Antriebsmotors oder einer Abtriebswelle eines Getriebemotors ausgestaltet sein.

Die Zugmittel 3 und die mindestens eine Traktionsfläche der Treibscheibe 2 sind derart ausgestaltet, dass sie zweckmässig zusammenwirken können. Bei den in den Fig. 2, 3 dargestellten Ausführungsformen weisen die Zugmittel 3, 3A-3E zu den Traktionsflächen 15 der Keilrillen 14, 14A-14E komplementäre Traktionsflächen an ihrem Mantel 24 auf.

Die Erfindung ist nicht auf die beschriebenen Ausführungsbeispiele beschränkt. Sie ist insbesondere im Zusammenhang mit jeder anderen Form von Zugmitteln im Aufzugbau anwendbar.


**Patentansprüche**

1. Aufzuganlage (1) mit einer Aufzugkabine (5), die mittels mindestens eines riemenartigen Zugmittels (3, 3A-3E) aufgehängt ist, wobei das Zugmittel (3, 3A-3E) einen Mantel aus einem Elastomer umfasst und über eine Treibscheibe (2) geführt ist, die zumindest eine Traktionsfläche (15) aufweist, in welcher Vertiefungen ausgebildet sind, die sich in Form von Rillen (16A-16E) im Wesentlichen quer zu einer Umfangsrichtung (18) der Treibscheibe (2) erstrecken, wobei die Treibscheibe (2) durch einen die mindestens eine Traktionsfläche (15) umfassenden, einstückigen Treibscheibenkörper gebildet ist und die Rillen (16A-16E) sich in diesem Treibscheibenkörper erstrecken.

2. Aufzuganlage nach Anspruch 1, wobei die Rillenbreite (20) der Rillen (16A-16E) kleiner als 3 mm ist.

3. Aufzuganlage nach Anspruch 1, wobei die Treibscheibe (2) mehrere nebeneinander angeordnete Traktionsflächen (15) für mehrere parallel angeordnete Zugmittel (3, 3A-3E) aufweist, wobei die Rillen (16C, 16D) sich unterbrechungsfrei quer zur Umfangsrichtung der Treibscheibe über alle Traktionsflächen (15) erstrecken.

4. Aufzuganlage nach Anspruch 2, wobei die Treibscheibe (2) mehrere nebeneinander angeordnete Traktionsflächen (15) für mehrere parallel angeordnete Zugmittel (3, 3A-3E) aufweist, wobei die Rillen (16C, 16D) sich unterbrechungsfrei quer zur Umfangsrichtung der Treibscheibe über alle Traktionsflächen (15) erstrecken.

5. Aufzuganlage nach einem der vorhergehenden Ansprüche, wobei eine Vielzahl von Rillen (16A-16E) im Wesentlichen gleichmässig über den Umfang der Treibscheibe (20) verteilt angeordnet sind.

6. Aufzuganlage nach einem der vorhergehenden Ansprüche, wobei das Material der Treibscheibe (2) härtbarer Stahl ist, und dass mindestens eine Traktionsfläche (15) gehärtet ist.

7. Aufzuganlage nach Anspruch 6, wobei mindestens eine Traktionsfläche (15) zumindest teilweise eine erhöhte Oberflächenrauheit aufweist, wobei die Traktionsfläche (15) zum Erhöhen der Oberflächenrauheit Riefen aufweist, die in einer Richtung (17) verlaufen, die von der Umfangsrichtung (18) abweicht.

8. Aufzuganlage nach einem der Ansprüche 1 bis 4, wobei mindestens eine Traktionsfläche (15) zumindest teilweise mit einer haftverstärkenden Beschichtung (30) versehen ist.

9. Aufzuganlage nach Anspruch 8, wobei die Beschichtung (30) kalottenförmige Mikrostrukturen oder dünne Hartstoffschichten mit Nanopartikeln aufweist.

10. Aufzuganlage nach einem der Ansprüche 1 bis 4, wobei die mindestens eine Traktionsfläche (15) so gestaltet ist, dass sie mit einem Keilriemen, einem Keilrippenriemen oder mit einem Flachriemen zusammenwirken kann.

11. Aufzuganlage nach einem der vorhergehenden Ansprüche, wobei das riemenartige Zugmittel (3, 3A-3E) die Form eines Keilriemens, eines Keilrippenriemens oder eines Flachriemens aufweist.


**Claims**

1. Lift installation (1) with a lift cage (5) suspended by at means of at least one belt-like traction means (3, 3A - 3E), wherein the traction means (3, 3A - 3E) comprises a casing of elastomer and is guided over a drive pulley (2), which has at least one traction surface (15) in which recesses extending in the form of grooves (16A - 16E) substantially transversely to a circumferential direction (18) of the drive pulley (2) are formed, wherein the drive pulley (2) is formed by an integral drive pulley body having the at least one traction surface (15) and the grooves (16A - 16E) extend in this drive pulley body.

2. Lift installation according to claim 1, wherein the groove width (20) of the grooves (16A - 16E) is smaller than 3 millimetres.

3. Lift installation according to claim 1, wherein the drive pulley (2) has a plurality of mutually adjacent traction surfaces (15) for a plurality of parallel traction means (3, 3A - 3E), wherein the grooves (16C, 16D) extend without interruption transversely to the circumferential direction of the drive pulley over all traction surfaces (15).

4. Lift installation according to claim 2, wherein the drive pulley (2) has a plurality of mutually adjacent traction surfaces (15) for a plurality of parallel traction means (3, 3A - 3E), wherein the grooves (16C, 16D) extend without interruption transversely to the circumferential direction of the drive pulley over all traction surfaces (15).

5. Lift installation according to any one of the preceding claims, wherein the grooves (16A - 16E) of a plurality are arranged to be distributed substantially uniformly over the circumference of the drive pulley (20).

6. Lift installation according to any one of the preceding claims, wherein the material of the drive pulley (2) is hardenable steel and at least one traction surface (15) is hardened.

7. Lift installation according to claim 6, wherein at least one traction surface (15) has at least in part an increased surface roughness, wherein the traction surface (15) has, for increasing the surface roughness, channels which extend in a direction (17) differing from the circumferential direction (18).

8. Lift installation according to any one of claims 1 to 4, wherein at least one traction surface (15) is provided at least partly with an adhesion-enhancing coating (30).

9. Lift installation according to claim 8, wherein the coating (30) has dome-shaped microstructures or thin hard-material coatings with nanoparticles.

10. Lift installation according to any one of claims 1 to 4, wherein the at least one traction surface (15) is so formed that it can co-operate with a V-belt, a wedge-ribbed belt or a flat belt.

11. Lift installation according to any one of the preceding claims, wherein the belt-like traction means (3, 3A - 3E) has the form of a V-belt, a wedge-ribbed belt or a flat belt.

**Revendications**

1. Installation d'ascenseur (1) avec une cabine d'ascenseur (5) qui est suspendue à l'aide d'au moins un moyen de traction en forme de courroie (3, 3A-3E), étant précisé que le moyen de traction (3, 3A-3E) comprend une gaine en élastomère et passe sur une poulie motrice (2) présentant au moins une surface de traction (15) dans laquelle sont formés des creux qui s'étendent, sous la forme de rainures (16A-16E), globalement transversalement par rapport à un sens périphérique (18) de la poulie motrice (2), étant précisé que la poulie motrice (2) est formée par un corps de poulie motrice d'une seule pièce qui comprend la ou les surfaces de traction (15), et que les rainures (16A-16E) s'étendent dans ce corps de poulie motrice.

2. Installation d'ascenseur selon la revendication 1, étant précisé que la largeur (20) des rainures (16A-16E) est inférieure à 3 mm.

3. Installation d'ascenseur selon la revendication 1, étant précisé que la poulie motrice (2) présente plusieurs surfaces de traction (15) disposées côte à côte pour plusieurs moyens de traction (3, 3A-3E) disposés parallèlement, étant précisé que les rainures (16C, 16D) s'étendent sans interruption, transversalement par rapport au sens périphérique de la poulie motrice, sur toutes les surfaces de traction (15).

4. Installation d'ascenseur selon la revendication 2, étant précisé que la poulie motrice (2) présente plusieurs surfaces de traction (15) disposées côte à côte pour plusieurs moyens de traction (3, 3A-3E) disposés parallèlement, étant précisé que les rainures (16C, 16D) s'étendent sans interruption, transversalement par rapport au sens périphérique de la poulie motrice, sur toutes les surfaces de traction (15).

5. Installation d'ascenseur selon l'une des revendications précédentes, étant précisé qu'une multiplicité de rainures (16A-16E) sont réparties globalement régulièrement sur la périphérie de la poulie motrice (20).

6. Installation d'ascenseur selon l'une des revendications précédentes, étant précisé que le matériau de la poulie motrice (2) est constitué par de l'acier apte à être trempé, et en ce qu'au moins une surface de traction (15) est trempée.

7. Installation d'ascenseur selon la revendication 6, étant précisé qu'au moins une surface de traction (15) présente au moins en partie une rugosité de surface accrue, et que la surface de traction (15), pour accroître la rugosité de surface, présente des stries qui s'étendent dans un sens (17) différent du sens périphérique (18).

**8.** Installation d'ascenseur selon l'une des revendications 1 à 4, étant précisé qu'au moins une surface de traction (15) est pourvue au moins en partie d'un revêtement (30) qui renforce l'adhérence.

**9.** Installation d'ascenseur selon la revendication 8, étant précisé que le revêtement (30) présente des microstructures en forme de calottes ou de minces couches de matériau dur avec des nanoparticules.

**10.** Installation d'ascenseur selon l'une des revendications 1 à 4, étant précisé que la ou les surfaces de traction (15) sont conçues de manière à pouvoir coopérer avec une courroie trapézoïdale, une courroie conique ou une courroie plate.

**11.** Installation d'ascenseur selon l'une des revendications précédentes, étant précisé que le moyen de traction en forme de courroie (3, 3A-3E) présente la forme d'une courroie trapézoïdale, d'une courroie conique ou d'une courroie plate.

**Fig. 1**

## Fig. 2

## Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1121220 A
- US 2007062762 A1